Europäisches Patentamt

European Patent Office

Office européen des brevets

(19)

(11) Publication number: **0 113 886**
**B1**

(12) **EUROPEAN PATENT SPECIFICATION**

(45) Date of publication of patent specification: **10.09.86**

(51) Int. Cl.⁴: **C 04 B 35/00**

(21) Application number: **83112609.9**

(22) Date of filing: **15.12.83**

(54) Ceramic composites with improved thermal shock resistance.

(30) Priority: **20.12.82 US 451122**

(43) Date of publication of application:
**25.07.84 Bulletin 84/30**

(45) Publication of the grant of the patent:
**10.09.86 Bulletin 86/37**

(84) Designated Contracting States:
**BE DE FR GB IT NL**

(56) References cited:
**WO-A-82/00820**
**DE-A-2 111 583**
**DE-C-1 112 441**
**FR-A-1 580 247**
**GB-A-1 053 934**
**GB-A-1 546 208**

(73) Proprietor: **THE DOW CHEMICAL COMPANY**
**2030 Dow Center Abbott Road P.O. Box 1967**
**Midland, MI 48640 (US)**

(72) Inventor: **Smith, Ronald Ross**
**Route 2 Box 324**
**Freeport Texas 77541 (US)**
Inventor: **Hensell, Walter Warren**
**58 South Shamrock Ct.**
**Lake Jackson Texas 77566 (US)**

(74) Representative: **Casalonga, Alain et al**
**BUREAU D.A. CASALONGA OFFICE JOSSE &**
**PETIT Morassistrasse 8**
**D-8000 München 5 (DE)**

EP 0 113 886 B1

Courier Press, Leamington Spa, England.

## Description

Ceramic materials have been made and used for thousands of years. More recently, industrial processes have demanded higher performance materials for increased temperature, thermal efficiency, operating life times and more chemically corrosive environments. These demands have often been met by materials of higher density (to reduce chemical permeation) and purity (to eliminate low melting phases). While this has generally been successful, these denser, more pure materials are more prone to damage during thermal transients due to the relative ease of crack propagation in the dense materials as compared to the less pure, less dense materials. One way to obtain acceptable ceramics of high density is by combining two materials with different thermal expansion characteristics. One such successful material is a composite of magnesia (MgO) and magnesium aluminum spinel ($MgAl_2O_4$) which is fusion cast. (Poured into forms from the molten state). The reduction in stress cracking is reported to be due to the gap which exists between the spinel matrix and the MgO grain, Smyth and Pollina, Refractory Oxides for MHD Heaters, High Temperature Science 13, pp. 189—217 (1980).

The desired thermal shock resistance has not been available in nonfusion cast ceramics because sintering the oxide starting powders does not produce a material with the proper microstructure.

It would therefore be advantageous to have a technique and composition readily available to produce the observed effect without the difficulties inherent in fusion casting, such as the high temperatures employed, uncontrolled porosity and shape and size limitations.

In accordance with the present invention it has now been found that a mixture of 1) a single metal or bimetal spinel having reactivity such as to densify upon heating, in the illustrative example, $MgAl_2O_4$ spinel, with 2) a decomposable metal salt, again as illustrative only, $MgCO_3$ or $Mg(OH)_2$, and as compatible with the $MgAl_2O_4$, which has a thermal expansion characteristic different from and preferably greater than that of the matrix (in the illustrative example $MgAl_2O_4$) and, as it decomposes, undergoes a reduction in volume greater than the thermally expanded volume of its oxide at the use temperature.

Such a mixture has been found to exhibit the ability to terminate thermal stress fractures and thus permit the body to retain structural integrity.

Exemplary of the spinels which are believed to exhibit sufficient thermal expansion differential from the metal salts are:

Spinel:
$CoAl_2O_4$
$CuAl_2O_4$
$FeAl_2O_4$
$MgAl_2O_4$
$MnAl_2O_4$
$NiAl_2O_4$
$ZnAl_2O_4$
$FeCr_2O_4$
$MgCr_2O_4$
$MnCr_2O_4$
$ZnCr_2O_4$
$MnFe_2O_4$
$ZnFe_2O_4$.

Exemplary of the island or segregated phase generating salts are MgX, FeX, CoX, and the like wherein X represents carbonate, hydroxide, nitrate, acetate, carboxyhydrate, and sulfate.

The spinels aforementioned must be in a reactive state which, as used herein, is intended to mean that the crystal structure is capable of undergoing densification during and/or after the thermal decomposition range of the decomposable salt.

Suitable techniques for preparing such spinels are taught EP 0059212 (82.09.08). These spinels are produced by the coprecipitation of a metal hydroxide, chloride, carbonate and the like to produce a layered crystal which has the theoretical hypothetical structural configuration:

$$\frac{M^{III}\ X}{(1+z)M^{II}\ X} \qquad (0<Z<3)+\text{sufficient}$$
$$M^{III}\ X$$

segregated $M^{III}\ X$ or $M^{II}\ X$ to provide a stoichiometric balance of $M^{II}X \cdot 2M^{III}X$ within the range of $M^{III}/M^{II}=1.8$ to 2.2. While the mole ratio of the previous application was 1.8 to $2.2/M^{III}$ to $M^{II}$, e.g. Al to Mg, it has now been found by our co-workers that ratios of 0.7 to 2.5/1 can be prepared in a similar manner by altering the reactant ratios. The spinel structure is obtained by heating the layered crystal precipitates to $\geqq400°C$ in most cases, although lesser or greater temperatures may be required to produce the oxide form of the metals of this precipitate.

The crystal structure of the products of the present invention, to be successful, may or may not contain any significant quantity of segregated phase of either metal or metals. While it may be apparent that when the decomposable salt is decomposed following initial mixing with the reactive spinel structure the metal oxide of such salt can and often does interact with the spinel crystal structures, the techniques for producing the compositions of the present invention should be such as to minimize such interaction. It is therefore obvious that some segregated phases may be present in spinel matrix. It is also possible to produce the spinel in such a way as to guarantee the presence of an intimately mixed second phase. The inclusion of such segregated phase in the matrix may be desirable when the ultimate use does not thermally stress the matrix beyond the structural strength required for the ultimate use and when one wishes to vary the properties of the matrix phase. This is the case in Example 2 where the matrix phase is a spinel/ MgO composite in about a 1/1 mole ratio with additional MgO present as distinct inclusions in this matrix.

The techniques for forming the ceramic bodies in the present invention is generally firing or high temperature sintering of a body preformed by pressing, slip casting, tape casting, extruding or other suitable techniques, with or without additives to maintain the powder in its desired shape during sintering. The desired effect may also be obtained in unshaped or specialty refractories wherein the starting materials are formed or mixed into small spheres for ultimate use in the casting mix.

The reactive powder of the present invention may suitably be employed in any modern day ceramic body forming process with equal or better results than when such processes are employed with known ceramic materials.

In accordance with the present invention, a high density, shock resistant ceramic composite having a microstructure comprising a dense spinel matrix surrounding discrete islands of a metal oxide phase with a gap between the two phases can be prepared by mixing, either dry or in liquid media, an oxide spinel pulverulent material with a thermally decomposable metallic salt pulverulent material, consolidating the mixed powder to an agglomerate or to any desired shape and heating the agglomerate or the shape to a sufficiently high temperature to cause the metal salt to decompose and both it and the oxide ceramic to densify together yielding the desired microstructure. The discrete islands are formed from the decomposable metallic salt pulverulent material having at the decomposition temperature a volume less than that exhibited by its salt form. The starting materials may be from any of a number of sources. The oxide spinel may be of natural mineral origin, chemical coprecipitation or other reaction, or from any thermal process including fusion forming (casting from the molten state), solid state reaction (formed below the melting temperature), oxidation of the elemental metals or any process that forms the oxide spinel from suitable starting materials. The decomposable salt may be from any of a number of sources, but must yield a metal oxide with a thermal expansion coefficient greater than that of the spinel. A primary requirement of the spinel starting material is that it forms upon heating to a temperature below its solidus temperature, a consolidated body with sufficient integrity to withstand its intended use.

One such way that a spinel may be prepared is in accordance with the aforementioned EP 0059212, or by coprecipitating metal compounds, that is the metal halides, sulfates, formates, hydrogen phosphate, hydroxides, acetate, nitrate, carbonate, bicarbonate and the like, or mixtures thereof including hydroxycarbonate, chloro-hydroxide, the halogenated carboxylates, in a proportion and kind to provide metal atoms of two different valences, albeit they may be the same metal or different metals, to total eight, plus or minus about 10 percent, positive valences available to combine with four oxygen atoms in the generic stylized formula $M_3O_4$ (or $MM'_2O_4$). The coprecipitation produces, when conducted at the pH at which coprecipitation occurs, (usually between about 9 and 9.5 for Mg/Al, and preferably washed, a product having a specific layered crystalline structure which may or may not contain a segregated magnesium hydroxide, aluminum hydroxide or oxyhydroxide phase(s). The coprecipitate is dried and calcined at 400°C to 1400°C thereby forming the crystal lattice of the spinel structure with or without segregated phases of either metal.

Thus, for example, if a magnesium compound such as, magnesium hydroxide, or the chloride, hydroxychloride, sulfate, phosphate, acetate, nitrate, halide, carbonate, bicarbonate, and the like, is coprecipitated with an aluminum compound, such as aluminum hydroxide, or the chloride or sulfate, at a pH to coprecipitate the compounds at least one of the metals is converted to its respective hydroxide or partial hydroxide during the coprecipitation followed by washing with or without alkalinity before recovering the coprecipitate there is obtained a product having the following composition upon drying at approximately 125°C for several hours:

$$(1+z)M^I{}_b^a X_a^b \cdot 2M^{II}{}_d^c Y_c^d$$

wherein each X and Y is independently selected from the aforementioned anions and at least one X and/or Y is —OH and z represents a number less than 3 and preferably about 1, and where when z is greater than 0 there will be present at least one segregated phase, as for example in the magnesium-aluminum coprecipitate an aluminum phase of $Al(OH)_3$ and/or $AlO(OH)$, and wherein "a" times the number of atoms of $M^{I(b)}$ equals the valence b of X times a, the number of atoms of X, and similarly c times the number of atoms of $M^{II(d)}$ equals the valence d of Y times c, the number of the atoms of Y, the $M^{II}/M^I$ ratio in the total coprecipitate being maintained at about 2 to 1 respectively, and having a volatile content of about 40 percent by weight when a Cl atom is present and about 36 percent by weight when all the X and Y's are —OH moieties, (analysis by thermogravimetric analysis). The exemplified coprecipitate is not a hydrate and individual crystallites have $M^{II}/M^I$ ratios significantly different from those previously reported, for example when $M^{II}$ is aluminum and $M^I$ is magnesium, as shown by micro-area x-ray fluorescence, electron diffraction and high resolution x-ray diffraction. The dried precipitate is thereafter calcined at between 400°C and 1200°C for from typically about 4 hours to about 1 hour, respectively. The calcined precipitate has an x-ray diffraction pattern of the spinel structure, for example, $MgAl_2O_4$ with or without a segregated phase.

In accordance with the present invention the so-calcined precipitate is mixed with additional decomposable salt to achieve the particular microstructure of the present invention. After forming into bricks or other ceramic shapes by pressing at preferably between 1000 to 10,000 psig (6.89 to 68.9 MPa) although higher pressures may be employed and firing said shapes at above about 1200°C, preferably above 1400°C. The shape will densify uniformly to about twice its unfired density or to about 90 to >99 percent of the theoretically reported density for the composite at temperatures of about 1500°C.

In addition to the basic spinel, i.e. $MgAl_2O_4$, numerous mixed spinels were prepared by the technique of the previous invention. Exemplary of the mixed spinels are $ZnCo_2O_4$ and $MgAl_{2-x}Cr_xO_4$ where the sum of the product of the valence times the number of atoms equals eight. The preferred way is to add the desired metal at the coprecipitation step. However, this may not always be practical, or the hydroxides may have such a large difference in solubility that a coprecipitate with the desired composition is not formed. The second method of preparation is to mix the separately prepared compounds in the desired ratio. This requires only a knowledge of the metal content by, for instance, X-ray fluorescence. The mixture may be ground intimately if a homogeneous composition (e.g. one mixed phase such as

$$Mg^{+2}_{0.3}Co^{-2}_{0.7}Al^{+3}_{1.3}Co^{-3}_{0.7}O_4)$$

is desired. It is also to be recognized that when the "mixed spinels" are desired and the third metal is, or two or more additional metals are added at the coprecipitate stage the pH for coprecipitation may have to be varied, as for example when chromium is added the pH is adjusted to insure coprecipitation of all three metals in, for example, a Mg/Al/Cr system. Alternately, a dry mixture may be mixed poorly, or a gross disparity in the particle size distribution of the starting materials may be introduced, if a range of compositions is desired (e.g.

$$Mg^{+2}_xCo^{+2}_{1-x}Al^{+3}_{2-y}Co^{+3}_yO_4,$$

where x and y vary from region to region in the mass). The most preferred way to prepare a range of solid solutions within one sample is to add at least one of the metals as the hard burned oxide which limits its reactivity. In general, the higher the preburned component has been calcined, the lower its activity will be toward solid solution formation. In some cases part of the additive metal may enter the spinel structure and part may form a separate oxide phase. In addition, a doping metal compound may be added to the pre-calcined or post-calcined spinel and may exhibit phase segregation or solid solution formation, depending on its reactivity and that of the spinel phase.

The modified spinels or composites of the present invention, in contradistinction to the previous invention, have a separate and easily identifiable segregated phase which is formed by adding a decomposable metal salt to the spinel powder before sintering, but after the spinel containing matrix itself has been produced.

In one embodiment of the present invention, magnesium hydroxide ($Mg(OH)_2$) powder was mixed with calcined stoichiometric spinel powder ($MgAl_2O_4$) obtained by coprecipitation of magnesium chloride and sodium aluminate. The mixture was formed by uniaxial pressing and fired to 1500°C to produce a dense, integral body which withstands, without catastrophic damage, repeated temperature excursions from about 1200°C to about 25°C.

In another embodiment of the present invention magnesium hydroxide powder was mixed with calcined spinel powder containing excess MgO of the approximate composition $MgAl_2O_4 \cdot MgO$. The latter powder was obtained by coprecipitation using an excess of magnesium chloride ($MgCl_2$) with sodium aluminate over the stoichiometric ratio for spinel and subsequent calcination. The two mixed powders were formed into a solid shape and sintered at 1500°C to near theoretical density. Its resistance to thermal cycling was similar to that of the product in the first embodiment.

In still another embodiment of this invention powders were mixed as in the first two cases, but formed into spheres of about 1 mm diameter. The spheres were fired to high density and used as aggregate in a refractory concrete.

In another embodiment of the present invention an additional metal is substituted partially or fully for either the magnesium and/or aluminum. For example, aqueous solutions of sodium aluminate ($Na_2Al_2O_4 \cdot 3H_2O$), magnesium chloride ($MgCl_2$), and chromium chloride ($CrCl_3$) were mixed, precipitated and the so-formed precipitate filtered and washed with water, dried and calcined at about 1000°C. This powder was ground with dry magnesium hydroxide yielding a powder suitable for compression-forming into ceramic shapes, which when sintered at above about 1400°C, preferably above about 1500°C, form the thermally shock resistant microstructure of the present invention.

Example 1

A 1500 gram sample of magnesium aluminate spinel ($MgAl_2O_4$) powder of 200 mesh (0.074 μm) fineness and of purity of about 99% prepared by coprecipitation as described and calcined to 1100°C was added to a 1000 gram sample of dried magnesium hydroxide. The resulting 2500 gram mass was placed in an intensive type Eirich Brand mixer. The rotor and pan were co-rotated at 250 rpm for 10 minutes. 150 grams of a 50/50 by weight solution of water and polyethylene glycol of 600 molecular weight was added slowly and the mixer operated for an additional 5 minutes. The resulting mixture was removed from the mixer and placed in an open pan to dry in a forced convection oven for 16 hours at 110°C.

The powder mixture was then placed into the die cavity of a forming press and vibrated to minimize entrapped air. The die dimensions were 200 mm×150 mm. The powder filled to a height of 134 mm. The press was then operated with the upper ram moving down and compacting the powder at a pressure of 55 MPa for a period of 2 minutes. The resulting compact was removed from the die cavity and placed in a forced convection type drying oven and heated at progressively higher temperatures from 60°C to 105°C over a period of 72 hours.

The dried compacted shape was then placed in a kiln and heated to 1500°C at a rate of 50°C per hour. This temperature was maintained for 10 hours. The furnace was then cooled at 50°C per hour to ambient conditions and the fired compact removed.

The resulting body has a density of 3.4 grams/cm$^3$ or 95 percent of the theoretical density of 3.58 grams/cm$^3$. Volumetric shrinkage is 27 percent from the die (green compact to the fired body). The final weight was 1911 grams. The weight of the compacted body was 2272 grams for a mass loss of 15.9 percent due primarily to the conversion of Mg(OH)$_2$ to MgO. Approximately 200 g was lost while charging the die.

The fired body was found to have a modulus of rupture (as measured by ASTM method C-133-72, using 1×1×6 inch (25.4×25.4×152.4 mm) bars) of 100 MPa and a hardness of 800 Knoop hardness number.

The resistance of the material to damage from thermal shock was also measured. A 1 inch (25.4 mm) cube was cut from the fired shape with a diamond coated circular blade. A furnace was preheated empty to 1200°C. The cube was set on the hearth of the furnace and the door closed. When 10 minutes had elapsed the door was opened, the cube was grasped with tongs and removed to a ceramic tile at ambient conditions and allowed to cool for ten minutes. No cracking was observed. The cube was returned to the furnace. 15 such cycles were performed with no damage that could be observed with the unaided eye.

A sample of the material was observed using electron microscopy. The spinel phase is observed to surround the magnesia phase with a "gap" between the two phases.

Example 2

A different material was substituted for the calcined spinel of Example 1. This material was coprecipitated with an excess of magnesium chloride to produce upon calcination a spinel with magnesium oxide present both in solid solution with the spinel and partially as a segregated phase. This powder was mixed with magnesium hydroxide in the same ratio as Example 1 and formed into a shape and fired in the same manner as in Example 1. Similar results were obtained on thermal cycling.

Example 3

Magnesium carbonate was used in place of magnesium hydroxide as in Example 1. A similar result was obtained.

Example 4

A magnesia alumina chromia spinel (MgAl$_{2-x}$Cr$_x$O$_4$) powder was mixed with magnesium hydroxide in the manner described by Example 1. The resulting pressed and fired body had properties similar to those of the first example.

**Claims**

1. A high density, shock resistant ceramic composite having a microstructure comprising a dense spinel matrix surrounding discrete islands of a metal oxide phase with a gap between the two phases, characterized in that the ceramic composite is prepared by mixing an oxide spinel pulverulent material with a thermally decomposable metallic salt pulverulent material, consolidating the mixed powder to an agglomerate or to any desired shape and heating the agglomerate or the shape to a sufficiently high temperature to cause the metal salt to decompose and both it and the oxide ceramic to densify together yielding the desired microstructure and whereby the metallic salt at its decomposition temperature has a volume less than that exhibited by its oxide form and whereby the metal oxide has a thermal expansion coefficient greater than that of the spinel.

2. A process for preparing a high density, shock resistant ceramic composite having a microstructure comprising a dense spinel matrix surrounding discrete islands of a metal oxide phase with a gap between the two phases, characterized in that an oxide spinel pulverulent material is mixed with a thermally decomposable metallic salt pulverulent material, the mixed powder is consolidated to an agglomerate or to any desired shape and the agglomerate or the shape is heated to a sufficiently high temperature to cause the metal salt to decompose and both it and the oxide ceramic to densify together yielding the desired microstructure and whereby as the thermally decomposable metallic salt a salt is used that at its decomposition temperature has a volume less than that exhibited by its oxide form and whereby the metal oxide has a thermal expansion coefficient greater than that of the spinel.

**Patentansprüche**

1. Stoßfester Keramikverbundwerkstoff hoher Dichte mit einem Mikrogefüge, das eine dichte Spinellmatrix um diskrete Inseln einer Metalloxidphase mit einem Zwischenraum zwischen den beiden Phasen umfaßt, dadurch gekennzeichnet, daß der keramische Verbundwerkstoff hergestellt wird durch Mischen eines pulverförmigen Oxid-Spinellmaterials mit einem thermisch zersetzbaren, pulverförmigen Metallsalz, Verfestigen des Pulvergemisches zu einem Agglomerat bzw. zu einer beliebigen gewünschten Form und Erhitzen des Agglomerats bzw. des Formlings auf eine hinreichend hohe Temperatur, so daß sich das Metallsalz zersetzt und sowohl dieses als auch die Oxide-Keramik zusammen verdichtet werden und das gewünschte Mikrogefüge ergeben und wobei das Metallsalz bei seiner Zersetzungstemperatur ein kleineres Volumen hat als in seiner Oxidform, und wobei das Metalloxid einen größeren Wärmeausdehnungskoeffizienten hat als das Spinell.

2. Verfahren zur Herstellung eines stoßfesten Keramikverbundwerkstoffes hoher Dichte mit einem Mikrogefüge, das eine dichte Spinellmatrix um diskrete Inseln einer Metalloxidphase mit einem Zwischenraum zwischen den beiden Phasen umfaßt, dadurch gekennzeichnet, daß ein pulverförmiges Spinellmaterial mit einem thermisch zersetzbaren, pulverförmigen Metallsalz vermischt wird, das Pulvergemisch zu einem Agglomerat oder zu einer beliebigen gewünschten Form verfestigt wird, und das Agglomerat bzw. der Formling auf eine hinreichend hohe Temperatur erhitzt wird, so daß sich das Metallsalz zersetzt und sowohl dieses als auch die Oxid-Keramik zusammen verdichtet werden und das gewünschte Mikrogefüge ergeben, wobei als thermisch zersetzbares Metallsalz ein Salz eingesetzt wird, das bei seiner Zersetzungstemperatur ein Volumen hat, das kleiner ist als in seiner Oxidform, und wobei das Metalloxid einen größeren Wärmeausdehnungskoeffizienten hat als das Spinell.

**Revendications**

1. Céramique composite à densité élevée, résistante aux chocs, présentant une microstructure comprenant une matrice de spinelle dense entourant des îlots discrets d'une phase d'oxyde métallique, avec une espace vide entre les deux phases, caractérisée en ce que l'on prépare la céramique composite en mélangeant un spinelle oxyde pulvérulent avec un sel métallique pulvérulent décomposable par la chaleur, en consolidant le mélange de poudres en un agglomérat ou sous une forme désirée quelconque, et en chauffant l'agglomérat ou ladite forme à une température suffisamment élevée pour provoquer la décomposition du sel métallique et la densification conjointe de celui-ci et de l'oxyde céramique, ce qui fournit la microstructure souhaitée, le sel métallique possédant, à la température de sa décomposition, un volume inférieur à celui présenté par l'oxyde correspondant, et l'oxyde métallique ayant un coefficient d'expansion thermique supérieur à celui du spinelle.

2. Procédé de préparation d'une céramique composite à densité élevée, résistante aux chocs, présentant une microstructure comprenant une matrice de spinelle dense entourant des îlots discrets d'une phase d'oxyde métallique, avec une espace vide entre les deux phases, caractérisé en ce que l'on mélange un spinelle oxyde pulvérulent avec un sel métallique pulvérulent décomposable par la chaleur, on consolide le mélange de poudres en un agglomérat ou sous une forme désirée quelconque, et on chauffe l'agglomérat ou ladite forme à une température suffisamment élevée pour provoquer la décomposition du sel métallique et la densification conjointe de celui-ci et de l'oxyde céramique, ce qui fournit la microstructure souhaitée, en utilisant, comme sel métallique décomposable par la chaleur, un sel qui possède, à la température de sa décomposition, un volume inférieur à celui présenté par l'oxyde correspondant, et l'oxyde métallique ayant un coefficient d'expansion thermique supérieur à celui du spinelle.